# EUROPEAN PATENT APPLICATION

(11) **EP 2 955 413 A1**
(43) Date of publication of application: **16.12.2015**
(21) Application number: 14172460.9
(22) Date of filing: 15.06.2014
(51) Int. Cl.: F16H 1/48, F03D 11/02, F16C 23/00

(54) **Planetary gear, drive train and wind generator**

(71) Applicant: Areva Wind GmbH, 27572 Bremerhaven (DE)
(72) Inventor: Pischel, Klaus, 27619 Schiffdorf-Spaden (DE); Meimann, Valentin, 48429 Rheine (DE)
(74) Representative: Prinz & Partner mbB

(57) **Abstract**

A planetary gear (10) is disclosed which comprises a rotatable gear-wheel (14) and a bearing unit (20) having axial and hinge bearing (24, 26). The bearing unit (20) is connected to a housing (22) of the planetary gear (10) and supports the gear-wheel (14) such that a tilting and/or a radial offset of the gear-wheel (14) is permitted and loads are introduced directly into the housing (22). Further, a drive train and a wind generator each comprising a planetary gear (10) are disclosed.

## Description

### FIELD OF THE INVENTION

The invention relates to a planetary gear, a drive train having a planetary gear and a wind generator comprising a drive train or a planetary gear.

### BACKGROUND

A planetary gear is used in various technical fields, in particular for transmission of high torques. This type of gear offers high gear transmission ratios at a relatively compact size. Typically, such a planetary gear is used in a drive train of a wind generator wherein the planetary gear comprises several gear-wheels, for example a sun wheel, planetary wheels as well as an annulus wheel being formed as a hollow wheel. The sun wheel is coupled to a rotor of the wind generator and it is further directly or indirectly coupled to an electric generator for production of electricity. Therefore, the wind generator has a generator unit comprising the electric generator and a gear unit comprising the planetary gear. The generator unit and the gear unit are connected to each other by the drive train, particularly a drive shaft or a driven shaft.

The different gear-wheels each have gear teeth which are provided on the outer and/or the inner circumferences of the gear-wheels. The gear-wheels are arranged such that the sun wheel is disposed in the middle of the planetary gear wherein the planetary wheels surround the sun wheel. The annulus wheel encases the planetary wheels. Hence, the planetary wheels mesh with the sun wheel and the outer annulus wheel. The sun wheel is centered within the planetary gear because of the engaging gear teeth of the sun wheel and the planetary wheels wherein a small radial movement of the sun wheel and/or the planetary gears is permitted and desired in order to compensate occurring radial loads.

When the gear teeth are provided with a helical gearing, an axial load is generated which has to be transferred to a housing of the planetary gear or of the wind turbine in order to guarantee that the sun wheel is maintained in its axial position.

Further, tilting and/or offset moments on the sun wheel may occur during operation as the wind applies different loads on the rotor which are directed to the sun wheel being coupled to the rotor.

Usually, the sun wheel is formed such that it represents a drive shaft simultaneously which carries the rotor of the wind generator and transmits the applied torque to the electric generator directly. In this embodiment, the occurring axial forces are transferred to an adjacent rotating gear element which is supported at the housing of the planetary gear for taking up the axial forces. Further, a pressure or spacer disk is provided between the adjacent gear element and the sun wheel, which is made of a bush bearing material and designed such that it can take up the tilting movement of the sun wheel which may occur during operation. However, the pressure or spacer disk will be worn because of the tilting movement of the sun wheel and has to be replaced in course of time.

Another typically used embodiment of a planetary gear or a drive train is configured such that the sun wheel is formed as a separate gear element which is connected to a separate driven shaft being part of the drive train and coupled to the electric generator. A clutch is provided between the sun wheel and the driven shaft for transmitting the torque of the sun wheel to the driven shaft. The driven shaft is typically radial supported by another clutch and axial supported by a hinge bearing. In this embodiment, the occurring axial loads on the sun wheel are transferred to the housing via the driven shaft being part of the generator unit.

Hence, in all known embodiments the occurring axial forces are transferred to another movable gear element being part of the generator unit.

### SUMMARY

It is an object of the invention to provide a planetary gear, a drive train and a wind generator having each a compact design while minimizing the path of the of loads.

In one aspect of the invention, a planetary gear is provided which comprises a rotatable gear-wheel and a bearing unit having an axial and a hinge bearing wherein the bearing unit is connected to a housing of the planetary gear and supports the gear-wheel such that a tilting and/or a radial offset of the gear-wheel is permitted and loads are introduced directly into the housing. The planetary gear has a compact design as the bearing unit is configured such that it comprises two different bearing functions, simultaneously. As the bearing unit has a hinge and axial bearing being different, the bearing unit is a hybrid bearing or in other words an axial bearing having an integrated hinge bearing. It is ensured that the rotatable gear-wheel is maintained in its axial position due to the axial bearing wherein the hinge bearing permits a tilting and/or a radial offset movement of the gear-wheel which may occur during operation when the gear-wheel is coupled to a rotor hub. The hybrid bearing of the invention ensures a more compact design when compared to known planetary gears according to which two spherical bearings are used for suspending the gear-wheel. According to the invention, one of the spherical bearings has been replaced by the hybrid bearing in order to free one of the ends of the gear-wheel.

Particularly, the gear-wheel is the sun wheel of the planetary gear. The sun wheel is the most stressed gear-wheel of a planetary gear used in a wind generator as it is exposed to the wind while carrying the rotor hub. Generally, the sun wheel is part of the generator unit or at least coupled to a driven shaft being part of the generator unit. Hence, the axial loads are transferred to the housing before being introduced into the electric generator.

Further, the bearing unit may comprise a linking member being connected to the axial bearing and the hinge bearing, in particular by its opposing ends. The linking member establishes an integral connection between the axial and the hinge bearings while a distance is provided between the axial and the hinge bearing as they are disposed at opposing ends of the linking member. Hence, the bearing unit differs significantly from a rolling bearing formed as an angular ball bearing. The linking member may be configured as a circumferential element which encloses a the sun wheel or a driven shaft.

According to another aspect of the invention, the linking member has a first portion being part of the hinge bearing, which first portion is particularly formed as a ball socket portion. The linking member comprises a part of the hinge bearing itself as the first portion ensures the hinge bearing function because of its geometrical configuration. Further, the first portion may be enclosed by the hinge bearing such that a relative tilting movement of the rest of the hinge bearing is ensured with respect to the linking member. The enclosing configuration also ensures that the first portion cannot be disengaged from the hinge bearing during operation.

Further, the first portion of the linking member is coupled to the rotating gear-wheel, particularly directly coupled. The tilting movement of the gear-wheel which may occur during operation can be compensated directly. As the whole bearing unit itself is not tilted, the planetary gear can be configured in a compact manner.

According to another aspect of the invention, the linking member has a second portion being part of the axial bearing, which second portion may be formed as a disk-like portion. The second portion may be coupled to the axial bearing in order to restrain axial movement of the linking member. Hence, an easy to be manufactured axial bearing is obtained as the disk-like portion can slide within the axial bearing.

Particularly, the linking member is guided in the axial bearing via the second portion. This ensures a linear movement of the linking member when axial forces are transferred to the linking member.

Further, the second portion of the linking member is coupled to the housing, particularly directly coupled. The occurring axial forces on the sun wheel are transferred via the bearing unit to the housing directly wherein the axial bearing ensures that the gear-wheel is maintained in its axial position and the hinge bearing permits a tilting and/or offset of the sun wheel, simultaneously.

Particularly, the axial bearing is a slide bearing or a rolling bearing. A slide or rolling bearing is typically used for manufacturing axial bearings. Generally, the axial bearing may be formed as a thrust bearing.

According to another aspect of the invention, at least one connecting element is provided which is connected to the linking member and the gear-wheel such that the linking member is rotatably coupled to the gear-wheel. The sun wheel drives the linking member during operation wherein the second portion of the linking member is configured such that it can rotate relative to the rest of the axial bearing which is stationary.

Particularly, the connecting element is bending elastic and torsion-resistant in rotating direction. Hence, a tilting and/or offset of the sun wheel is permitted by the bearing unit comprising the connecting element. It is also ensured that the linking member rotates with the same speed as the gear-wheel.

Further, the linking member has actuation elements, in particular external teeth, which can be coupled to an external unit such that the external unit is actuated by the linking member via the actuation elements. The transferred rotation of the gear-wheel can be used for actuating an external unit, for example a pump or any other auxiliary unit.

The axial bearing may comprise guiding elements or guiding pads for absorbing axial loads. Particularly, several guiding elements or guiding pads can be disposed along the circumference of the second portion such that a homogenous absorption of the axial loads is obtained. The guiding elements or guiding pads are advantageous as they increase the stiffness to the second portion within the axial bearing. In an alternative embodiment, the axial bearing may be a roller bearing or a standard axial bearing. However, all mechanical solutions provide an axial load bearing.

The invention also relates to a drive train comprising a planetary gear as described above.

According to another aspect of the invention, a wind generator is provided which comprises a drive train or a planetary gear according to the above mentioned configuration.

Further, the wind generator comprises a rotor which is coupled to the gear-wheel being supported by the bearing unit.

Same or similar advantages, which have been mentioned with respect to the planetary gear according to aspects of the invention, apply to the drive train and the wind generator in a same or similar way and are therefore not repeated.

### BRIEF DESCRIPTION OF DRAWING

Further aspects and features of the invention ensue from the following description of a preferred embodiment of the invention with reference to the accompanying drawings, wherein
FIG. 1 is a schematic view of a wind generator according to the invention,
FIG. 2 is a cross-sectional view showing a part of a drive train according to the invention comprising a planetary gear according to the invention, and
FIG. 3 is a cross-sectional view of a linking member according to a certain embodiment.

### DETAILED DESCRIPTION OF EXAMPLE EMBODIMENT

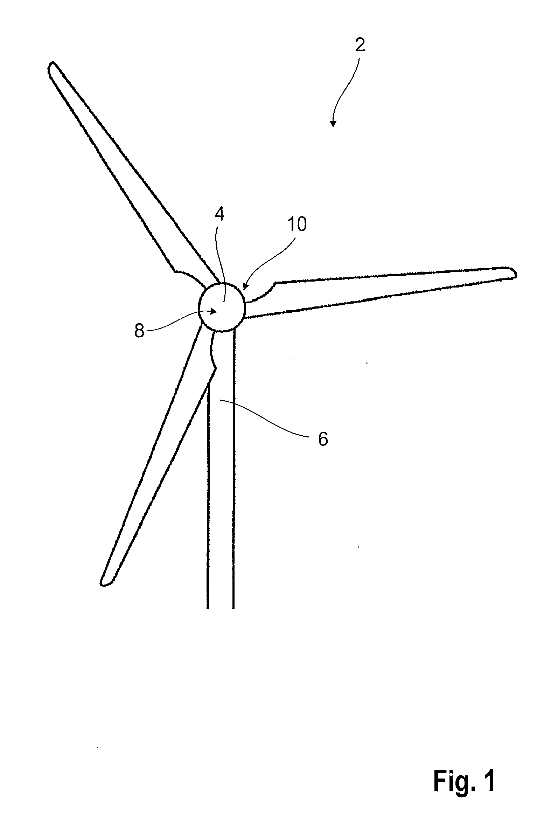

In FIG. 1 a simplified perspective view of a wind generator 2 is shown. The wind generator 2 comprises a rotor hub 4 and a support structure 6, for example a tower, which carries a nacelle (not visible) and is based on a foundation.

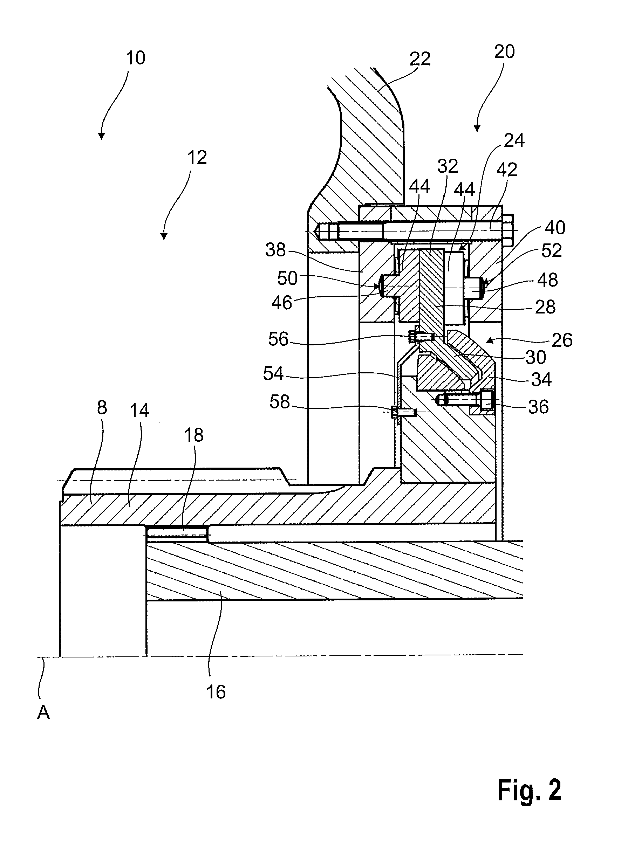

The rotor hub 4 comprises a main shaft 8 which is coupled to a planetary gear 10 which is shown in FIG. 2. The occurring torque on the rotor hub 4 is transmitted via a drive train 12 comprising the planetary gear 10 to an electric generator for the production of electricity.

The invention generally applies to driving and driven shafts on either side of the planetary gear.

The wind generator 2 can be equipped with a planetary gear 10 or a drive train 12 according to an embodiment of the invention, which is shown in FIG. 2 being a cross-sectional view of a part of the drive train 12 comprising the planetary gear 10.

The planetary gear 10 comprises several gear wheels wherein only a sun wheel 14 is shown which rotates around an axis of rotation A. Typically, the gear wheels, e.g. the sun wheel 14, the planetary gears (not shown) and the outer annulus gear, have gear teeth for meshing with each other in order to transmit the applied torque in a multiplied or reduced manner. This depends on the configuration of the planetary gear 10.

According to one embodiment, the sun wheel 14 may be coupled to the main shaft 8 while both are separated parts. According to another embodiment, the sun wheel 14 may be integrally formed such that it represents the main shaft, simultaneously.

In general, the gear wheels are formed such that a radial movement of the sun wheel 14 is restrained. However, a certain radial movement is permitted due to the configuration of the gear teeth for absorbing radial loads.

The drive train 12 according to the shown embodiment comprises a driven shaft 16 which is coupled to the sun wheel 14 for transmitting the applied torque to the electric generator. The sun wheel 14 and the driven shaft 16 are coupled with each other by a toothed engagement 18 which ensures torque transmission.

As the sun wheel 14 is directly coupled to the rotor hub 4 or at least indirectly, a tilting movement of the sun wheel 14 may occur during operation when the wind applies tilting moments to the rotor hub 4. Further, the gear-wheels may comprise gear teeth having a helical gearing which results in an axial load which also applies on the sun wheel 14.

Therefore, axial loads as well as tilting loads on the sun wheel 14 have to be supported by the planetary gear 10 or the dive shaft 12.

According to the invention, the planetary gear 10 comprises a bearing unit 20 which supports the sun wheel 14 and permits a tilting or a radial offset movement of the sun wheel 14, simultaneously.

The bearing unit 20 introduces the occurring axial loads directly into a housing 22 of the planetary gear 10 as will be described hereinafter in detail.

In general, the bearing unit 20 provides axial and hinge bearing functions as it comprises an axial bearing 24 being directly disposed at the housing 22 as well as a hinge bearing 26 being directly coupled to the sun wheel 14.

The bearing unit 20 further comprises a linking member 28 which has a first portion 30 being part of the hinge bearing 26 as well as a second portion 32 being part of the axial bearing 24. As the portions 30, 32 are arranged at opposite ends of the linking member, the different bearings 24, 26 are also arranged in a certain distance to each other. The second portion 32 may be orientated perpendicular to the axis of rotation.

In general, the hinge bearing 26 is built by a bracket-like element 34 which is directly fixed to the sun wheel 14 or at least a projection thereof by a fixing member 36. Within the bracket-like element 34 the first portion 30 of the linking member 28 is engaged which is formed as a ball socket portion and which is surrounded by the bracket-like element 34. Hence, a relative movement of the bracket-like element 34 with respect to the linking member 28 is ensured. Further, a disengagement of the hinge bearing 26 is avoided during operation of the planetary gear 10 as the bracket-like element 34 and the first portion 30 have corresponding shapes which may be partially circular or cup-shaped.

The second portion 32 of the linking member 28 is formed as a disk-like portion being part of the axial bearing 24 which also comprises two stops 38, 40 for restraining the axial movement of the linking member 28. The axial stops 38, 40 may be integrally formed and fixed to the housing 22 by another fixing member 42.

As fixing members 36, 42 a bolt may be used.

Further, the second portion 32 may be connected to two guiding elements or guiding pads 44 which each have a pin 46, 48 engaging holes 50, 52 provided within the axial stops 38, 40. The guiding elements or guiding pads 44 can be installed into holes of the second portion 32. In the shown embodiment, the guiding elements or guiding pads 44 sandwich the second portion 32. Alternatively, a bracket-like guiding element may be provided which surrounds the outer radial edge of the second portion 32.

In Figure 2, only two guiding elements or guiding pads 44 are shown. However, many of them are evenly distributed along the circumference of the second portion 32 for absorbing the axial loads homogenously. Alternatively, the axial bearing 24 may comprise a roller bearing or a standard axial bearing for absorbing the axial loads.

The bearing unit 20 further comprises at least one connecting element 54 which is coupled to the sun wheel 14 and the linking member 28 by fixation elements 56, 58 which may be bolts. The connection is designed such that the connecting element 54 is rotatably coupled to the sun wheel 14 wherein the relative speed between these parts is zero as no torque transmission is intended in this embodiment.

Hence, the linking member 28 rotates with the sun wheel 14 during operation. This means that the second portion 32 of the linking member 28 is arranged within the axial bearing 24 while a rotating movement of the second portion 32 is not restrained.

This can be achieved when the second portion 32 is movable connected to the guiding elements 44 or, alternatively, the second portion 32 is fixedly connected to the guiding elements 44, but the pins 46, 48 may move along the holes 50, 52 freely.

The operation of the planetary gear 10 or drive train 12 is as follows:

During operation, the rotor hub 4 rotates and drives the main shaft 8 which is integrally formed with the sun wheel 14 or at least directly coupled to the sun wheel 14. Hence, the sun wheel 14 also rotates and transmits the applied torque to the driven shaft 16 via the bearing 18. The torque is further transmitted from the driven shaft 16 to an electric generator for producing electricity.

However, tilting and/or offset loads may act on the rotor hub 4 resulting in a tilting and/or offset movement of the sun wheel 14. This movement of the sun wheel 14 is permitted by the bearing unit 20 as the hinge portion of the bearing unit 20, e.g. the hinge bearing 26 permits a tilting movement of the sun wheel 14.

The rolling bearing 18 may also compensate tilting movement of the sun wheel 14 such that the driven shaft 16 is always orientated parallel to the axis of rotation.

The bracket-like element 34 is also tilted wherein the engaging first portion 30 of the linking member 28 remains in its position such that a relative movement of the bracket-like element 34 with respect to the first portion 30 occurs. This relative movement is possible due to the ball or cup shapes of the bracket-like element 34 and the first portion 30.

As the connecting element 54 is bending elastic, a tilting movement of the sun wheel 14 is not transferred to the linking member 28, even though a connection is provided by the elastic connecting element 54. It can be a disc or made of disc portions or stripes. The connecting element 54 may be fixed with longitudinal holes in order to allow relative radial movement while not restraining the tilting movement.

Further, axial loads may occur on the sun wheel 14 due to the gear teeth of the gear-wheels of the planetary gear 10. These axial loads also have to be restrained by the bearing unit 20.

An axial load occurring on the sun wheel 14 is transmitted via the hinge bearing 26 and the connecting element 54 being torsion-resistant in rotating direction to the linking member 28. This results in an axial movement of the linking member 28 and the second portion 32 until the second portion 32 reaches one of the two stops 38, 40 restraining further axial movement. As the stops 38, 40 are directly coupled to the housing 22, the axial loads are transferred to the housing 22 directly without any transfer to other movable gear elements being parts of the gear unit or the generator unit.

Therefore, the inventive planetary gear 10 and drive train 12 comprise a bearing unit 20 which is compact and permits a direct support of the occurring axial forces on the sun wheel 14 while permitting a tilting and/or offset movement of the sun wheel 14 relative to the housing 22, simultaneously.

In the preferred embodiment which is shown in FIG. 2, the hinge bearing 20 is directly coupled to the sun wheel 14 while the axial bearing 24 which may be formed as a thrust bearing is directly coupled to the housing 22. Hence, a tilting of the sun wheel 14 is directly compensated in the hinge bearing 26 such that the linking member 28 is always maintained in its relative radial position with respect to the axis of rotation A.

According to another embodiment of the invention which is not shown, the hinge bearing 26 may be arranged directly at the housing 22 while the axial bearing 24 is directly coupled to the sun wheel 14. In this embodiment, a tilting of the sun wheel 14 results in a tilting of the linking member 28 wherein the tilting movement is compensated by the hinge bearing 26 before being introduced into the housing 22.

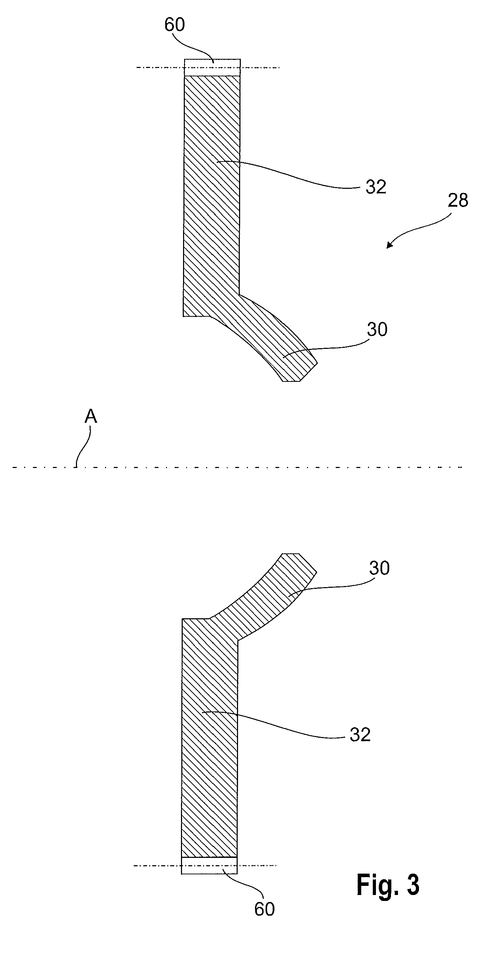

FIG. 3 shows the linking member 28 in a cross sectional view according to a certain embodiment.

The linking member 28 has actuation elements 60, in particular external teeth, which can be coupled to an external unit such that the external unit is actuated by the linking member 28 via the actuation elements 60 when the linking member 28 rotates around the axis of rotation A. Hence, a pump may be driven indirectly by the rotating sun wheel 14. In this embodiment, the relative speed between the connecting element 54 and the sun wheel 14 (both not shown in Fig. 3) is unequal zero for providing a torque transmission which is intended for driving the pump.

In general, FIG. 3 shows that the first portion 30 is formed as a collar-like disk protruding from the second portion 32 while the first portion 30 extends in an axial and in a radial inwards directed direction with respect to the second portion 32. The first portion 30 has an opening for receiving the sun wheel 14 and the bracket-like element 34 of the hinge bearing 26.

According to the invention, the drive train 12 and the wind generator 2 comprising such a planetary gear 10 and the planetary gear 10 have a compact design.

Further, a separation of the gear unit and the generator unit is provided as the occurring axial loads, the radial loads and the tilting loads are not transferred to other members being part of the generator unit. Instead, the occurring loads are directly supported at the housing 22. The separation is provided by the bearing 18 connecting the sun wheel 14 and the driven shaft 16 while the gear unit comprises the sun wheel 14 and the planetary gear 10 whereas the generator unit comprises the driven shaft 16 and the electric generator.

## Claims

1. A planetary gear (10) comprising a rotatable gear-wheel (14) and a bearing unit (20) having axial and hinge bearing (24, 26) wherein the bearing unit (20) is connected to a housing (22) of the planetary gear (10) and supports the gear-wheel (14) such that a tilting and/or a radial offset of the gear-wheel (14) is permitted and loads are introduced directly into the housing (22).

2. Planetary gear (10) according to claim 1, **characterized in that** the gear-wheel (14) is the sun wheel of the planetary gear (10).

3. Planetary gear (10) according to claim 1 or 2, **characterized in that** the bearing unit (20) comprises a linking member (28) being connected to the axial bearing (24) and the hinge bearing (26), in particular by its opposing ends.

4. Planetary gear (10) according to claim 3, **characterized in that** the linking member (28) has a first portion (30) being part of the hinge bearing (26), which first portion (30) is particularly formed as a ball socket portion.

5. Planetary gear (10) according to claim 4, **characterized in that** the first portion (30) of the linking member (28) is coupled to the rotating gear-wheel (14), particularly directly coupled.

6. Planetary gear (10) according to any of the claims 3 to 5, **characterized in that** the linking member (18) has a second portion (32) being part of the axial bearing (24), which second portion (32) is particularly formed as a disk-like portion.

7. Planetary gear (10) according to claim 6, **characterized in that** the linking member (28) is guided in the axial bearing (24) via the second portion (32).

8. Planetary gear (10) according claim 6 or 7, **characterized in that** the second portion (32) of the linking member (28) is coupled to the housing (22), particularly directly coupled.

9. Planetary gear (10) according to any of the preceding claims, **characterized in that** the axial bearing (24) is a sliding bearing.

10. Planetary gear (10) according to any of the preceding claims, **characterized in that** at least one connecting element (54) is provided which is connected to the linking member (28) and the gear-wheel (14) such that the linking member (28) is rotatably coupled to the gear-wheel (14).

11. Planetary gear (10) according to claim 10, **characterized in that** the connecting element (54) is bending elastic and torsion-resistant in rotating direction.

12. Planetary gear (10) according to any of the preceding claims, **characterized in that** the linking member (28) has actuation elements, in particular external teeth, which can be coupled to an external unit such that the external unit is actuated by the linking member (28) via the actuation elements.

13. Planetary gear (10) according to any of the preceding claims, **characterized in that** the axial bearing (24) comprises guiding elements or guiding pads (44) for absorbing occurring axial loads, particularly several guiding elements or guiding pads (44) which are disposed along the circumference of the second portion (32).

14. Drive train (12) comprising a planetary gear according to any of the preceding claims.

15. Wind generator (2) comprising a planetary gear (10) according to any of the claims 1 to 13 or a drive train (12) according to claim 14, which particularly has a rotor hub (4) which is coupled to the gear-wheel (14) being supported by the bearing unit (20).
